# EUROPEAN PATENT APPLICATION

(11) **EP 2 204 227 A2**
(43) Date of publication of application: **07.07.2010**
(21) Application number: 09174440.9
(22) Date of filing: 29.10.2009
(51) Int. Cl.: B01D 53/86

(54) **Carbon Oxide and/or Sulfur Oxide Capture in a Liquid Environment**

(30) Priority: 29.10.2008 US 109222 P; 13.10.2009 US 577806
(71) Applicant: Babcock & Wilcox Power Generation Group, Inc., Barberton, OH 44203-0351 (US)
(72) Inventor: May, Michael P., SW North Canton, OH 44709 (US)
(74) Representative: Meldrum, David James

(57) **Abstract**

The present invention relates generally to the field of emission control equipment for boilers, heaters, kilns, or other flue gas-, or combustion gas-, generating devices (e.g., those located at power plants, processing plants) and, in particular to a new and useful method and apparatus designed to remove and/or capture carbon oxides (e.g., CO₂ or CO) from flue gas-, or combustion gas-, generating devices. In another embodiment, the present invention relates to a method for achieving emission control from flue gas-, or combustion gas-, generating devices where the method achieves a reduction in, or the elimination of, carbon oxides or sulfur oxides contained in the flue gas-, or combustion gas-, generating devices.

## Description

### Field

The present invention relates generally to the field of emission control equipment for boilers, heaters, kilns, or other flue gas-, or combustion gas-, generating devices (*e.g.*, those located at power plants, processing plants) and, in particular but not exclusively to a new and useful method and apparatus designed to remove and/or capture carbon oxides (*e.g.*, CO₂ or CO) from flue gas-, or combustion gas-, generating devices. In another embodiment, the present invention relates to a method for achieving emission control from flue gas-, or combustion gas-, generating devices where the method achieves a reduction in, or the elimination of, carbon oxides or sulfur oxides contained in the flue gas-, or combustion gas-, generating devices.

### Background

Carbon dioxide from fossil fuel combustion has been identified as a major contributor to the "green house effect" and synonymously linked to "global warming." Therefore, the argument for controlling and/or limiting "global warming" would be supported by limiting or eliminating carbon dioxide produced by the combustion of fossil fuels (*e.g.*, coal, oil, natural gas) as well as carbon dioxide produced by combustion of any carbon containing material (including, but not limited to: ethanol, methanol, other alcohols, wood, peat, methane, waste, or any carbonaceous material) before the carbon dioxide is released into the atmosphere.

Given the above, a need exists for a method and/or apparatus that provides for manner by which to remove one or more carbon oxides from a flue gas-, or combustion gas-, generating device.

### Summary

The present invention relates generally to the field of emission control equipment for boilers, heaters, kilns, or other flue gas-, or combustion gas-, generating devices (*e.g.*, those located at power plants, processing plants) and, in particular to a new and useful method and apparatus designed to remove and/or capture carbon oxides (*e.g.*, CO₂ or CO) from flue gas-, or combustion gas-, generating devices.

In accordance with one aspect of the present invention, there is provided a method for capturing one or more gaseous carbon oxides and/or sulfur oxides from a flue gas, the method comprising the steps of: (I) providing a flue gas containing at least one gaseous carbon oxide and/or sulfur oxide to a reaction vessel, wherein the reaction vessel contains an aqueous, or liquid, reaction medium therein, the aqueous, or liquid, reaction medium comprising one or more sacrificial metal catalysts selected from neutral metal atoms, neutral metal particles, metal ions, or mixtures of two or more thereof; (II) permitting the flue gas from Step (I) to react in, or with, the aqueous, or liquid, reaction medium in order to form one or more solid polymer complexes from the at least one gaseous carbon oxide and/or sulfur oxide; and (III) removing the one or more solid polymer complexes from the reaction medium.

Accordingly, another aspect of the present invention is drawn to providing a method for capturing one or more gaseous carbon oxides and/or sulfur oxides from a flue gas, the method comprising the steps of: (a) providing a flue gas containing at least one gaseous carbon oxide compound and/or sulfur oxide compound to a reaction containment structure, wherein the reaction containment structure contains at least one solution, the solution comprising one or more metal atoms and/or metal ions that act as one or more sacrificial catalysts which initiate a polymerization reaction in one or more gaseous carbon oxides and/or sulfur oxides; and (b) permitting the flue gas from Step (a) to react with, or in, the at least one solution thereby forming one or more solid polymer complexes according to one or more of the following reactions: 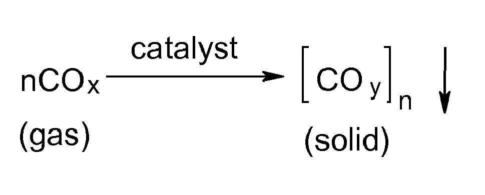 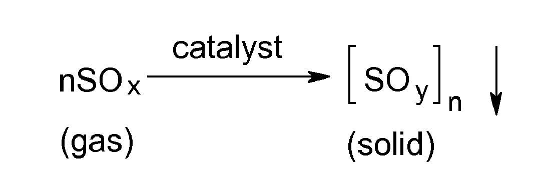 where each n independently represents the moles of carbon oxides and/or sulfur oxides present, where each x and y independently represent the number of oxygen atoms, and where x and y can be equal to or different from one another.

Accordingly, still another aspect of the present invention is drawn to a method for capturing one or more gaseous carbon oxides and/or sulfur oxides from a flue gas, the method comprising the steps of: (i) providing a flue gas containing at least one gaseous carbon oxide compound and/or sulfur oxide compound to a reaction containment structure, wherein the reaction containment structure contains at least one homogeneous solution, the homogeneous solution comprising one or more metal atoms and/or metal ions that act as one or more sacrificial catalysts which initiate a polymerization reaction in one or more gaseous carbon oxides and/or sulfur oxides; and (ii) permitting the flue gas from Step (i) to react in, or with, the at least one homogeneous solution thereby forming one or more solid polymer complexes according to one or more of the following reactions: 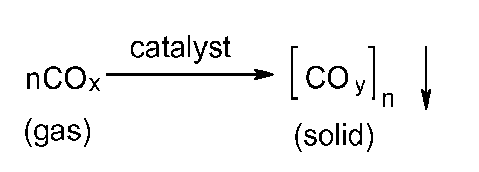 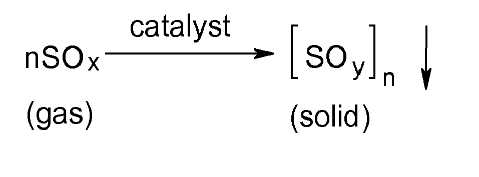 where each n independently represents the moles of carbon oxides and/or sulfur oxides present, where each x and y independently represent the number of oxygen atoms, and where x and y can be equal to or different from one another.

In another embodiment, the above method further includes the step of: adding at least one stabilizer compound in order to raise the pH level of the homogeneous solution in order to elevate the decomposition temperature of the one or more solid polymer complexes in order to facilitate the wet storage of the one or more solid polymer complexes.

In still another embodiment, the above method further includes the step of: adding at least one stabilizer compound in the form of an adhesive or coating where upon drying the one or more solid polymer complexes will not decompose.

Another aspect of the present invention is drawn to an apparatus designed to accomplish any of the above methods such apparatuses being as shown and described herein. In yet another aspect of the present invention there is provided a method for continuously capturing one or more carbon oxides and/or sulfur oxides from a flue gas, or combustion gas, such a method being shown and described herein.

The various features of novelty which characterize the invention are pointed out with particularity in the claims annexed to and forming a part of this disclosure. For a better understanding of the invention, its operating advantages and specific benefits attained by its uses, reference is made to the accompanying drawings and descriptive matter in which exemplary embodiments of the invention are illustrated.

### Brief Description of the Drawings

Figure 1 is an illustration of one embodiment of an apparatus designed to capture carbon oxides and/or sulfur oxides in accordance with the present invention;

Figure 2 is an illustration of another embodiment of an apparatus designed to capture carbon oxides and/or sulfur oxides in accordance with the present invention;

Figure 3 is an illustration of still another embodiment of an apparatus designed to capture carbon oxides and/or sulfur oxides in accordance with the present invention;

Figure 4 is an illustration of still yet another embodiment of an apparatus designed to capture carbon oxides and/or sulfur oxides in accordance with the present invention;

Figure 5 is an illustration of still yet another embodiment of an apparatus designed to capture carbon oxides and/or sulfur oxides in accordance with the present invention;

Figure 6 is an end view along the 6-6 line of Figure 5;

Figure 7 is a top-down view along the 7-7 line of Figure 5;

Figures 8 through 10 detail an exemplary process for capturing carbon oxides and/or sulfur oxides using the device of Figures 5 through 7.

### Detailed Description

While the present invention will be described in terms of removing carbon oxides from flue gas-, or combustion gas-, generating devices such as power plants, the present invention is not limited to only these types of systems. Rather, the method of the present invention could be applied to any device that generates flue gases, or combustion gases, that contain carbon oxides or sulfur oxides.

As used in the specification and claims, the phrase "homogeneous solution" (hereinafter referred to sometimes as just a solution) means all of the reaction components including, but not limited to, the reactants, any catalysts, any pH modifiers, any suspension agents, or any stabilizers are in an aqueous phase, liquid phase and/or solution phase. As used herein the word "homogeneous" is not meant to imply that any solution, or solutions, discussed herein are totally randomized.

As used in the specification and claims, the phrase "reaction medium" means all of the reaction components including, but not limited to, the reactants, any catalysts, any pH modifiers, any suspension agents, or any stabilizers are in an aqueous phase, liquid phase and/or solution phase. The reaction mediums of the present invention are virtually identical to the aforementioned "homogeneous solutions" of the present invention except that they may, or can, be less homogenous then the aforementioned "homogenous solutions."

As used in the specification and claims, the phrase "solid polymer complex" or "solid polymer complexes" includes not only polymer complexes that are anhydrous, that are dry (*i.e.*, have less than about 5 percent by weight liquid content), those that contain less than about 20 weight percent liquid (*i*.*e*., high solid-content solutions), and even those that are suspensions (*i*.*e*., those solutions that are more than 20 weight percent liquid) that contain therein one or more solids. Also, the definition of "solid polymer complex" or "solid polymer complexes" includes a precipitate that is present in a liquid and/or aqueous solution.

As used in the specification and claims, the term "polymer" not only encompasses hydrocarbon polymers, copolymers (regardless of orientation of the polymer blocks), terpolymers, or higher polymer analogs, but also encompasses all polymers, copolymers (regardless of orientation of the polymer blocks), terpolymers, or higher polymer analogs formed from one or more monomers derived from one or more carbon oxides, one or more sulfur oxides, or any combination of two or more monomers derived from such oxides.

As used in the specification and claims, the phrase "catalytic lite-off" means the initiation of a chemical reaction based on the presence of one or more catalysts with one or more reactants due to the existence of one or more optimal reaction conditions.

Although the present invention is described in relation to a boiler, or a fossil fuel boiler, it is not limited solely thereto. Instead, the present invention can be applied to any combustion source that generates carbon oxides and/or sulfur oxides regardless of whether such a combustion source is utilized in conjunction with a boiler, or a steam generator. For example, the present invention could be used in combination with a kiln, a heater, a glass furnace, waste gas burner, or any other type of combustion process that generates, in whole or in part, a flue gas or combustion gas containing carbon oxides and/or sulfur oxides. Accordingly, the description below is to be construed as being merely by way of example.

In one embodiment, the present invention relates to a process and apparatus designed to capture carbon oxides and/or sulfur oxides from any source including, but not limited to, flue gases or combustion gases, by contacting the gaseous carbon oxides and/or sulfur oxides with an aqueous, or liquid, solution or reaction medium containing one or more metal catalysts in the form of neutral atoms or charged ions to form a solid polymer complex from one or more carbon oxides or sulfur oxides where the monomer is derived from any one or more of CO, CO₂, CO₃⁻², SO, SO₂, SO₃, or even any combination of two or more thereof, whereby the captured carbon oxides and/or sulfur oxides can be removed from the aqueous, or liquid, solution or reaction medium as a precipitate, a high purity gas or a stabilized solid. In this case the one or more metal catalysts facilitate the formation of one or more polymer complexes from the one or more carbon oxides and/or sulfur oxides.

In another embodiment, a flue gas, or combustion gas, is passed through the aforementioned aqueous, or liquid, solution or reaction medium in any suitable manner. Suitable manners include, but are not limited to, gas bubbling, gas sparging (whereby a gas sparger produces tiny or microscopic bubbles), or gas-liquid interfacial absorption (whereby the molecules of reactant species are absorbed by the liquid). In gas-liquid interfacial absorption, the gas and liquid may require static contact before catalytic lite-off.

In still another embodiment, additional manners of reacting the flue gas, or combustion gas, with the aqueous, or liquid, solution or reaction medium include, but are not limited to, flowing the flue gas, or combustion gas, over or through a stagnant liquid, or flowing the aqueous, or liquid, solution or reaction medium over or through a stagnant gas, or flowing the gas into a flowing aqueous, or liquid, solution or reaction medium. In one instance, the polymerization reaction may need the presence of a stagnant zone (*i*.*e*., a motionless zone) to initiate catalytic lite-off and possibly to even sustain polymerization.

Once the carbon oxides and/or sulfur oxides are captured in the form of one or more solid polymer complexes, such compounds can be removed and/or recovered from the aqueous, or liquid, solution or reaction medium via any number of suitable methods. Such suitable methods include, but are not limited to, filtration, evaporation, distillation, gravity separation, solids thickener, drying, decomposition, or a combination of any two or more thereof.

In one embodiment, to provide a stable solid for permanent sequestration and/or storage and to reduce the possibility of decomposition back to the original gaseous carbon oxides and/or sulfur oxides, one or more stabilizers such as a coating or an adhesive can be added to the aqueous, or liquid, solution or reaction medium prior to the separation of the one or more polymer complexes from the aqueous, or liquid, solution or reaction medium to stabilize the one or more solid polymer complexes.

In one instance, the one or more solid polymer complexes do not need to be recovered from the aqueous, or liquid, solution or reaction medium. Rather, the aqueous, or liquid, solution or reaction medium containing the one or more solid polymer complexes can itself be stored or sequestered. Alternatively, to provide stability at elevated temperatures a wet "solid" polymer complex can be stabilized by raising the pH of the aqueous, or liquid, solution or reaction medium the liquid content of which can then be reduced to yield a very high solid content solution by gravity separation or through the use of a solids thickener. In this case, the high solid content solution can itself be stored or sequestered.

In one embodiment, the carbon oxides and/or sulfur oxides in solution react by homogeneous catalysis where one or more metal neutral atom catalysts or one or more metal ion catalysts in suitable oxidation states are utilized. Suitable oxidation states include elemental, or neutral, metal atoms as well as metal ions. Suitable metals for use in conjunction with the present invention include, but are not limited to, alkali metal atoms or ions (Group 1 metals - New Notation System), alkali-earth metal atoms or ions (Group 2), transition metal atoms or ions (including those metals in Groups 3 through 11), other metal atoms or ions in Group 12, or combinations of any two or more thereof. In another embodiment, the one or more metal atoms or ions for use in conjunction with the present invention further include one or more atoms or ions selected from ions formed from the elements listed in Groups 13 through 17. In still another embodiment, the one or more metal atoms or ions for use in conjunction with the present invention further include atoms or ions formed from the elements listed in the Lanthanide and Actinide Series of the Periodic Table. In still yet another embodiment, the one or more metal atoms or ions for use in conjunction with the present invention further include atoms or ions can be any combination of two or more ions from the different groups of atoms or ions listed above so long as the ions used can form a capturable compound when reacted with one or more carbon oxides and/or sulfur oxides. In still another embodiment, the present invention's aqueous, or liquid, solution or reaction medium can be formed from sea water as sea water contains enough of one or more of the metal atoms or ions mentioned above.

In one embodiment, the capture methods of the present invention produce one or more insoluble carbon- and/or sulfur-containing compounds that are the result of the capture of one or more carbon oxides and/or sulfur oxides. In another embodiment, the capture methods of the present invention produce one or more soluble carbon- and/or sulfur-containing compounds that are the result of the capture of one or more carbon oxides and/or sulfur oxides. In still another embodiment, the capture methods of the present invention produce a mixture of soluble and insoluble carbon- and/or sulfur-containing compounds that are the result of the capture of one or more carbon oxides and/or sulfur oxides.

As is discussed above, the methods of the present invention utilize one or more catalysts. In one embodiment, the one or more catalysts of the present invention are selected from precious metal catalysts including, but not limited to, neutral atoms and/or ions of gold, silver, palladium, platinum, or mixtures of two or more thereof. In another embodiment, the one or more catalysts of the present invention are selected from precious metal particle catalysts including, but not limited to, gold particles, silver particles, palladium particles, platinum particles, or mixtures of two or more thereof. In still another embodiment, the one or more catalysts of the present invention are selected from precious metal nanoparticle catalysts including, but not limited to, gold nanoparticles, silver nanoparticles, palladium nanoparticles, platinum nanoparticles, or mixtures of two or more thereof. By nanoparticles it is meant that the particles of the elemental precious metal catalyst or precious metal compound catalyst have an average particle diameter of less than about 1,000 nanometers (1 micron), less than about 500 nanometers, less than about 250 nanometers, less than 100 nanometers, less than 50 nanometers, less than 25 nanometers, less than 10 nanometers, or less than 5 nanometers, or even the size of one metal atom. Here, as well as elsewhere in the specification and claims, individual range limits or individual numerical values can be combined to form non-disclosed ranges.

In another embodiment, particles, or nanoparticles similar to those discussed above but formed from the above-mentioned non-precious metals can be utilized in conjunction with the present invention.

In another embodiment, the metal particles, metal nanoparticles, or metal ions utilized in conjunction with the present invention include, but are not limited to, neutral gold particles (Au⁰), neutral gold atoms (Au⁰), or gold ions; neutral zinc particles, neutral zinc atoms, or zinc ions (all oxidation states); palladium ions (*e.g.*, Pd⁺², etc.); scandium ions (*e.g.*, Sc⁺², etc.); manganese ions (*e.g.*, Mn⁺⁵, etc.); titanium ions (*e.g.*, Ti⁺², etc.); chromium ions (*e.g.*, Cr⁺², etc.); cesium ions; iron ions; praseodymium ions; cobalt ions; nickel ions; molybdenum ions; cadmium ions; ruthenium ions; gadolinium ions; or mixtures of two or more thereof.

The amount of catalyst, if present, that is utilized in conjunction with various embodiments of the present invention is not critical so long as a sufficient amount of catalyst is present to cause, or facilitate, a capture reaction and/or sequestration reaction with any one or more carbon oxides and/or sulfur oxides present in a flue gas, or combustion gas, effluent that is being passed through the aforementioned sea water or catalyst-containing aqueous, or liquid, solution or reaction medium of the present invention. Exemplary levels of catalyst include, but are not limited to, a concentration of at least about 5 parts per trillion (ppt), at least about 10 ppt, at least about 20 ppt, at least about 25 ppt, at least about 40 ppt, or even at least about 50 ppt. Higher concentrations on the order of about 250 mg per liter are possible and are within the scope of the present invention. Here, as well as elsewhere in the specification and claims, individual range limits or individual numerical values can be combined to form non-disclosed ranges.

In another embodiment, the level of the one or more catalysts in the reaction medium of the present invention can be any level up to the solubility limit for each of the one or more catalysts depending upon the various chemical and physical properties of the reaction medium (*e.g.*, pH, temperature, water-content, etc).

It should be noted that with regard to particle geometry any particle geometry can be utilized for the catalyst particles of the present invention. Suitable particle geometries include, but are not limited to spherical, oblong, cylindrical, elliptical, irregular, or any combination of two or more thereof. As is noted above, the one or more precious metal catalyst can be in the form of an ion particle or an elemental particle.

In one embodiment, the aqueous, or liquid, solution or reaction medium for carrying out the present invention is a water-based medium containing the aforementioned one or more metal atoms, particles and/or ions. In another embodiment, sea water can be utilized to accomplish the capture of the aforementioned carbon oxides and/or sulfur oxides. In still another embodiment, the aqueous, or liquid, solution or reaction medium for the present invention can be the brine effluent from a desalination plant.

In still another embodiment, the present invention is directed to any process by which the carbon oxides and/or sulfur oxides in a flue gas, or combustion gas, effluent is contacted with sea water or an aqueous, or liquid, solution or reaction medium (*e.g.*, water) containing metals or aqueous metallic atoms and/or ions without the presence of one or more of the aforementioned catalysts. In one variant of this embodiment, the one or more metal atoms and/or ions can serve both to sequester the aforementioned carbon oxides and/or sulfur oxides as well as to catalyze the reaction process. In this embodiment, the one or more metal atoms and/or ions are typically formed from the metals found in Groups 10 and 11.

In accordance with the present invention, a method for capturing one or more gaseous carbon oxides and/or sulfur oxides from a flue gas, the method comprising the steps of: (a) providing a flue gas containing at least one gaseous carbon oxide compound and/or sulfur oxide compound to a reaction containment structure, wherein the reaction containment structure contains at least one solution, the solution comprising one or more metal atoms and/or metal ions that act as one or more sacrificial catalysts which initiate a polymerization reaction in one or more gaseous carbon oxides and/or sulfur oxides; and (b) permitting the flue gas from Step (a) to react with the at least one solution thereby forming one or more solid polymer complexes according to one or more of the following reactions: 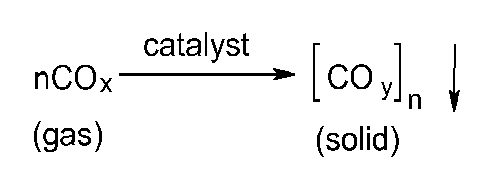 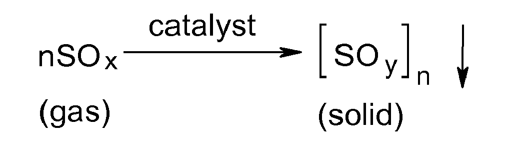 where n represents the moles of carbon oxides and/or sulfur oxides present, where x and y represent the number of oxygen atoms, and where x and y can be equal to or different from one another.

Accordingly, another aspect of the present invention is drawn to a method for capturing one or more gaseous carbon oxides and/or sulfur oxides from a flue gas, the method comprising the steps of: (i) providing a flue gas containing at least one gaseous carbon oxide compound and/or sulfur oxide compound to a reaction containment structure, wherein the reaction containment structure contains at least one homogeneous solution, the homogeneous solution comprising one or more metal atoms and/or metal ions that act as one or more sacrificial catalysts which initiate a polymerization reaction in one or more gaseous carbon oxides and/or sulfur oxides; and (ii) permitting the flue gas from Step (i) to react with the at least one homogeneous solution thereby forming one or more solid polymer complexes according to one or more of the following reactions: 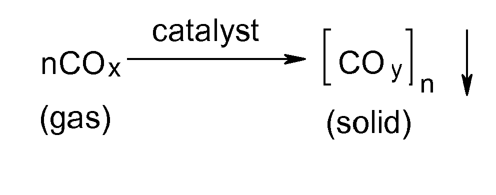 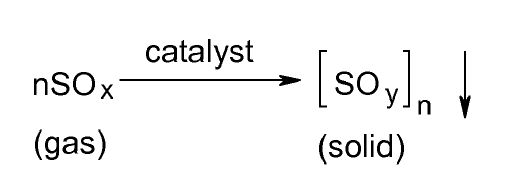 where n represents the moles of carbon oxides and/or sulfur oxides present, where x and y represent the number of oxygen atoms, and where x and y can be equal to or different from one another.

In another embodiment, the above method further includes the step of: (iii) adding at least one stabilizer compound in order to raise the pH level of the homogeneous solution in order to elevate the reaction temperature and/or the decomposition temperature of the one or more solid polymer complexes in order to facilitate the wet storage of the one or more solid polymer complexes.

In still another embodiment, the above method further includes the step of: (iv) adding at least one stabilizer compound in the form of an adhesive or coating where upon drying the one or more solid polymer complexes will not decompose. In this embodiment, the addition of the at least one stabilizer compound helps to facilitate the recovery of the one or more solid polymer complexes from the reaction medium due to the fact that some solid polymer complexes formed in accordance with the present invention may decompose upon recovery from the reaction medium without the use of the aforementioned at least one stabilizer compound.

Another aspect of the present invention is drawn to an apparatus designed to accomplish any of the above methods such apparatuses being as shown and described herein. In yet another aspect of the present invention there is provided a method for continuously capturing one or more carbon oxides and/or sulfur oxides from a flue gas, or combustion gas, such a method being shown and described herein.

Any of the aforementioned embodiments can produce a solid product where the product comprises polymer chains of captured carbon oxides and/or sulfur oxides linked by the catalytic metals described above. In one embodiment, the methods of the present invention can produce a solid product where the product comprises polymer chains of captured carbon oxides and/or sulfur oxides linked by the catalytic neutral gold atoms or neutral gold particles described above.

In still yet another embodiment of the present invention, carbon oxides in a flue gas, or combustion gas, effluent are contacted with sea water or an aqueous, or liquid, solution or reaction medium (*e.g.*, water) containing one or more metal atoms, particles and/or ions that can act as a sacrificial catalyst. In this embodiment, the one or more metal atoms, particles and/or ions selected from one or more ions that react with carbonate, sulfite and/or sulfate ions to form solid carbonates, sulfites, and/or sulfate compounds. In one instance the one or more metal atoms, particles and/or ions react with one or more carboxylate, sulfite and/or sulfate ions that may be present in the aqueous, or liquid, solution or reaction medium to form one or more non-gaseous metallic carbonate compounds, one or more non-gaseous metallic sulfate compounds, one or more non-gaseous metallic sulfite compounds, or mixtures of two or more thereof. Examples of such compounds include, but are not limited to, calcium carbonate, calcium bicarbonate, magnesium carbonate, magnesium bicarbonate, other carbonates of calcium, magnesium, manganese. As would be apparent to those of skill in the art, other carbonate compounds are possible depending up the exact make-up of the one or more metal atoms, particles and/or ions as is discussed above. This same embodiment can be applied to sulfur oxide compounds or even a situation where a mixture of carbon oxides and sulfur oxides are present.

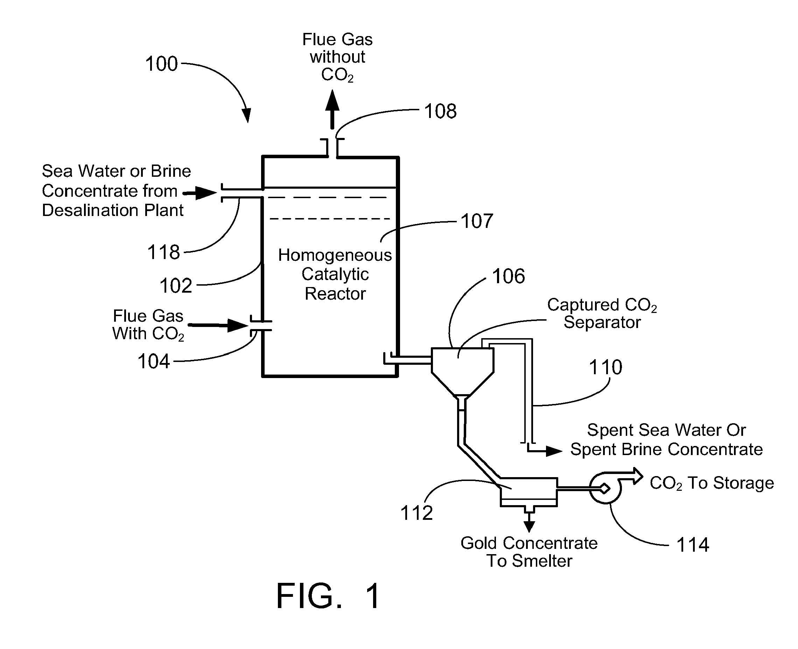

Turning to the Figures attached hereto, Figures 1 through 4 illustrate example arrangements for various apparatuses designed to capture carbon oxides and/or sulfur oxides using the method described above. In Figures 1 through 4 like reference numerals refer to like parts. Turning to Figure 1, this Figure illustrates an apparatus 100 designed to capture carbon oxides and/or sulfur oxides using the method discussed above. The apparatus of Figure 1 is comprised of a homogeneous catalytic reactor 102 that is that contains therein an aqueous, or liquid, solution or reaction medium in accordance with the discussion contained above. Reactor 102 has an inlet 104 for permitting the introduction of a flue gas, or combustion gas, into reactor 102, where the flue gas, or combustion gas, contains, among other things, carbon oxides and/or sulfur oxides. While inside reactor 102 the carbon oxides and/or sulfur oxides in the flue gas, or combustion gas, react with the aqueous, or liquid, solution or reaction medium 107 contained within reactor 102 to yield a solid polymer complex of captured carbon oxides, a solid polymer complex of captured sulfur oxides, non-gaseous carbonates, sulfates, and/or sulfites that are captured and removed from reactor 102 using separator 106. In one arrangement, the non-gaseous carbonates, sulfates, and/or sulfites are solid precipitates that can, if so desired, be removed from the aqueous, or liquid, solution or reaction medium discussed above by any number of techniques including filtration, evaporation, thickening, drying, etc. If so collected, the solid carbonates, sulfates, and/or sulfites can be used in other industries (e.g., in the manufacture of wallboard). Once the carbon oxides and/or sulfur oxides are removed from the flue gas, or combustion gas, in reactor 102 the "cleaned" flue gas, or combustion gas, is permitted to exit via outlet 108 in reactor 102. From separator 106 the non-gaseous carbonates, sulfates, sulfites are collected in the bottom portion thereof and removed via section 112. Additionally, section 112 is designed to collect, remove or otherwise trap, if present, the one or more precious metal catalysts. In the embodiment of Figure 1, the captured carbon oxides and/or sulfur oxides are kept wet so that they are able to be pumped to separating section 114 where the carbon oxides and/or sulfur oxides are removed using, for example, drying, heating or heating to return to gaseous form to be sent to storage.

In another arrangement, system 100 of Figure 1 optionally has an inlet 118 designed to permit the introduction of additional aqueous, or liquid, solution or reaction medium. In one arrangement, the aqueous, or liquid, solution or reaction medium can be sea water, brine concentrate from a desalination plant, or an aqueous, or liquid, solution or reaction medium that contains at least one of the above-mentioned metal catalysts.

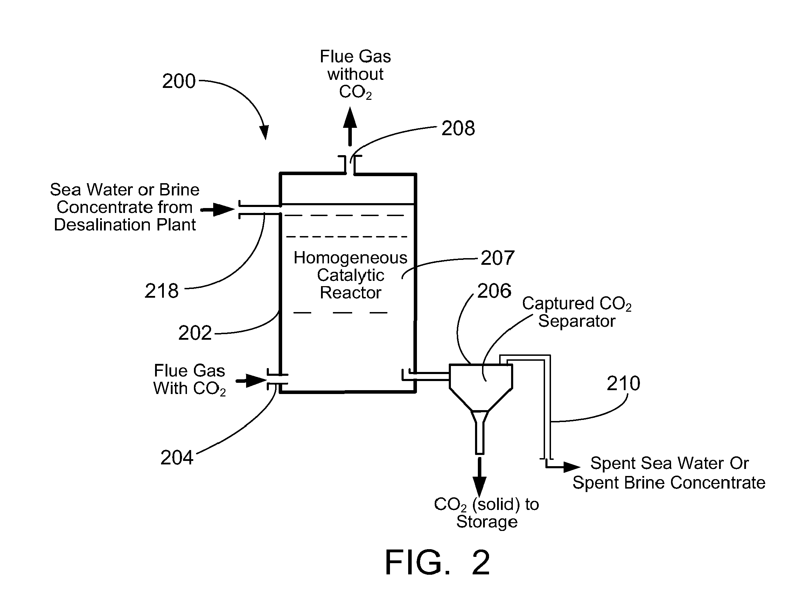

Turning to the embodiment of Figure 2, arrangement 200 differs from arrangement 100 in that the non-gaseous captured carbon oxides, captured sulfur oxides, carbonates, sulfates, and/or sulfites are in the form of a solid and are captured and removed from reactor 202 by separator 208. In this arrangement, the aqueous, or liquid, solution or reaction medium contained within reactor 202 does not necessarily contain one or more metal catalysts. However, if a catalyst is desired and/or needed, sea water can be used as sea water contains an acceptable level of, for example, dissolved elemental gold.

In another arrangement, system 200 of Figure 2 optionally has an inlet 218 designed to permit the introduction of additional aqueous, or liquid, solution or reaction medium. In one arrangement, the aqueous, or liquid, solution or reaction medium can be sea water, brine concentrate from a desalination plant, or an aqueous, or liquid, solution or reaction medium that contains at least one of the above-mentioned metal catalysts.

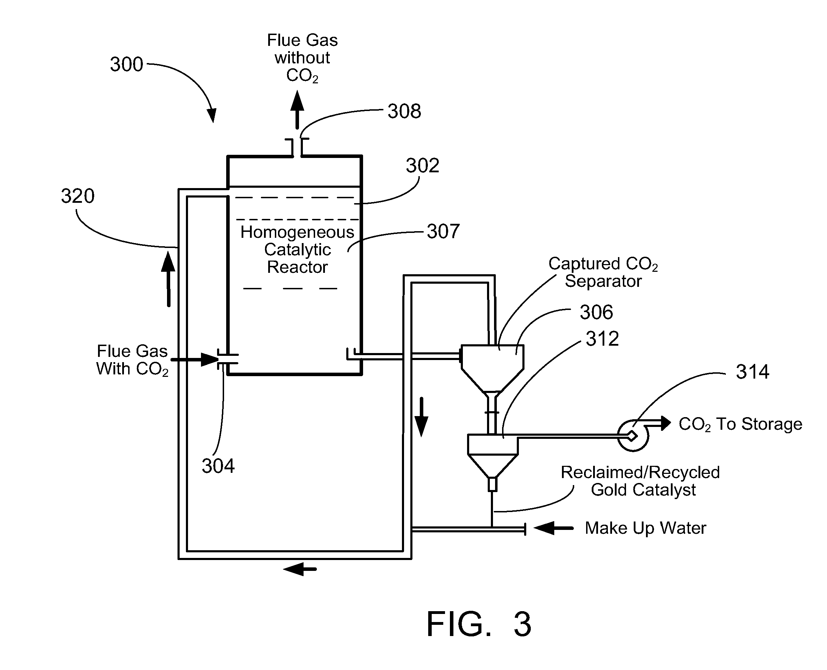

Turning to Figure 3, arrangement 300 differs from arrangement 100 in that a supply line 320 is designed to replenish the aqueous, or liquid, solution or reaction medium containing catalyst to reactor 302. Replenishment line 320 is designed to supply the desired synthesized aqueous, or liquid, solution or reaction medium with catalyst to reactor 302 in order to permit the method of the present invention to be operated in a continuous manner.

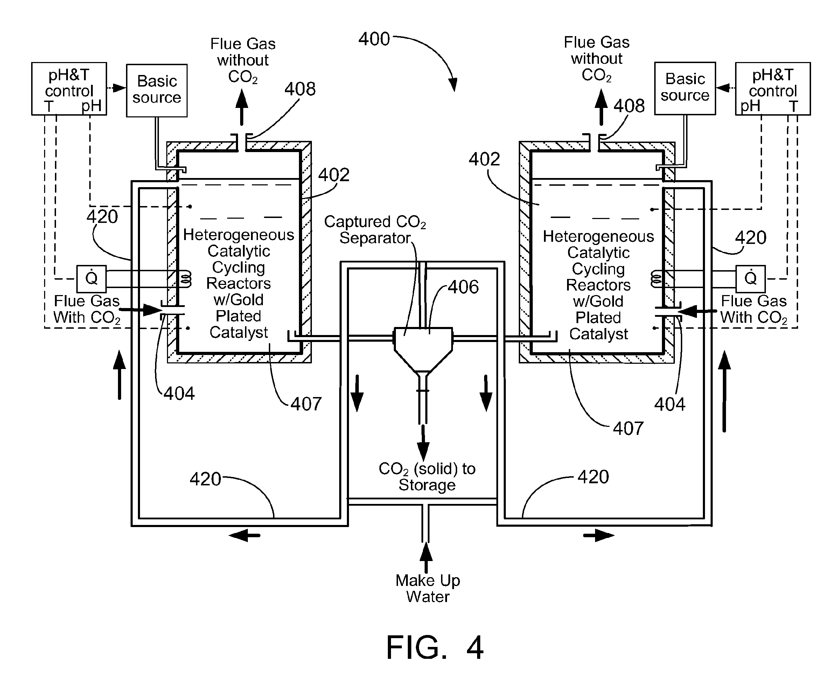

Turning to Figure 4, arrangement 400 differs from arrangement 200 in that two or more reactors 402 are utilized to increase the throughput volume of the flue gas, or combustion gas that can be processed by a method in accordance with the present invention. Additionally, a supply line 420 is designed to replenish the aqueous, or liquid, solution or reaction medium to reactor 402. Replenishment line 420 is designed to supply the desired aqueous, or liquid, solution or reaction medium to reactors 402 in order to permit the method to be operated in a continuous manner. Additionally, as can be seen from Figure 4, apparatus 400 further comprises one or more control systems for controlling various chemical parameters within the reactors 402 of apparatus 400. Such parameters include, but are not limited to, temperature and/or pH.

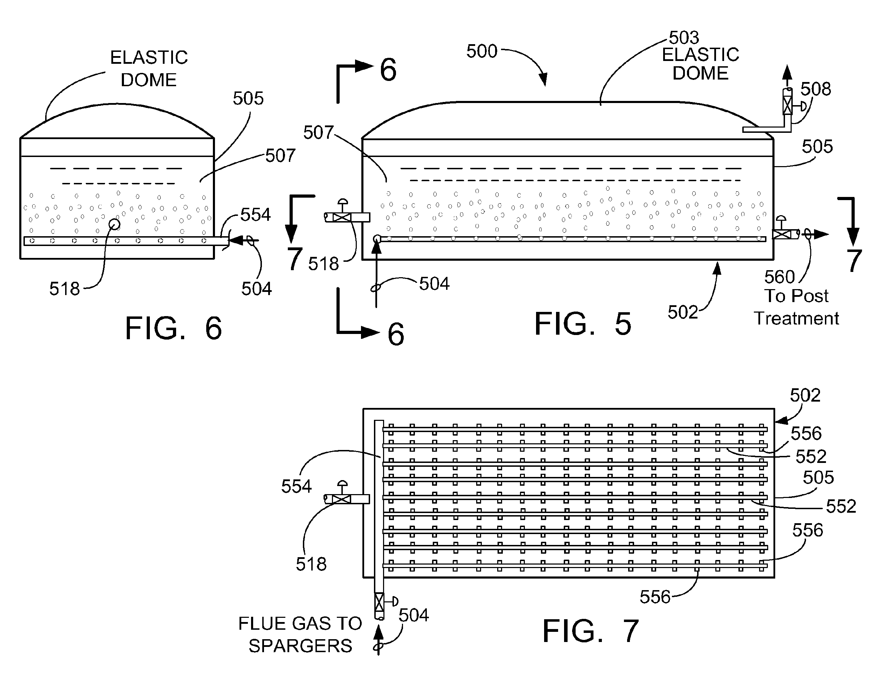

Turning to Figures 5 through 7, these Figures illustrate an alternative arrangement. In system 500 of Figures 5 through 7 an expandable tank reactor 502 is used instead the hard-walled reactors of apparatuses 100 through 400. In apparatus 500, expandable tank reactor 502 is expandable due to, for example, an expandable elastic dome 503 formed from any suitable material that can "stretch" so as to expand. Exemplary suitable expandable materials for elastic dome 503 include, but are not limited to, latex, rubbers, expandable fabrics. The only required property of expandable elastic dome 503 is that the material used therein is gas-impermeable. Suitable materials for expandable elastic dome 503 are know to those of skill in the art. As such, a detailed discussion herein is omitted for the sake of brevity.

In one arrangement, expandable tank reactor 502 has non-expandable sides 505 that can be made from any suitable material (*e.g.*, metal, plastic, ceramic, etc). Additionally, as would be apparent to those of skill in the art the shape of expandable tank reactor 502 is not critical. As such, any desired shape can be used without limitation. Some suitable shapes include, but are not limited to, round, oval elliptical, square, rectangular, polygonal, etc. Additionally, the size of expandable tank reactor 502 is not limited to any specific size. Rather, the size of expandable tank reactor 502 will be determined by, for example, the amount of gas and/or the flow rate of the gas that is going to be treated therein in any given interval of time.

As can be seen from Figures 5 through 7, this arrangement further comprises an inlet 504 for permitting the introduction of a flue gas, or combustion gas, into expandable tank reactor 502, where the flue gas, or combustion gas, contains, among other things, carbon oxides and/or sulfur oxides. While inside expandable tank reactor 502 the carbon oxides and/or sulfur oxides in the flue gas, or combustion gas, react with the aqueous, or liquid, solution or reaction medium 507 contained within expandable tank reactor 502 to yield a solid polymer complex of captured carbon oxides, a solid polymer complex of captured sulfur oxides, non-gaseous carbonates, sulfates, and/or sulfites that are captured and removed from expandable tank reactor 502 via any suitable technique including, but not limited to, a separator, settling, etc. via optional collection outlet 560. In one arrangement, the non-gaseous carbonates, sulfates, and/or sulfites are solid precipitates that can, if so desired, be removed from the aqueous, or liquid, solution or reaction medium discussed above by any number of techniques including filtration, evaporation, thickening, drying, etc. If so collected, the solid carbonates, sulfates, and/or sulfites can be used in other industries (*e.g.*, in the manufacture of wallboard). Once the carbon oxides and/or sulfur oxides are removed from the flue gas, or combustion gas, in expandable tank reactor 502 the "cleaned" flue gas, or combustion gas, is permitted to exit via outlet 508 in expandable tank reactor 502.

As can be seen from Figures 5 through 7, expandable tank reactor 502 further comprises a plurality of spargers 550 that are connected to inlet 504 via a sparger supply line 552. Furthermore, each sparger 552 has a plurality of sparging nozzles 556 attached thereto for the purposes of generating bubbles from the flue gas, or combustion gas, supplied via inlet 504. Suitable sparger setups are known to those of skill in the art and, as such, a detailed discussion herein is omitted for the sake of brevity.

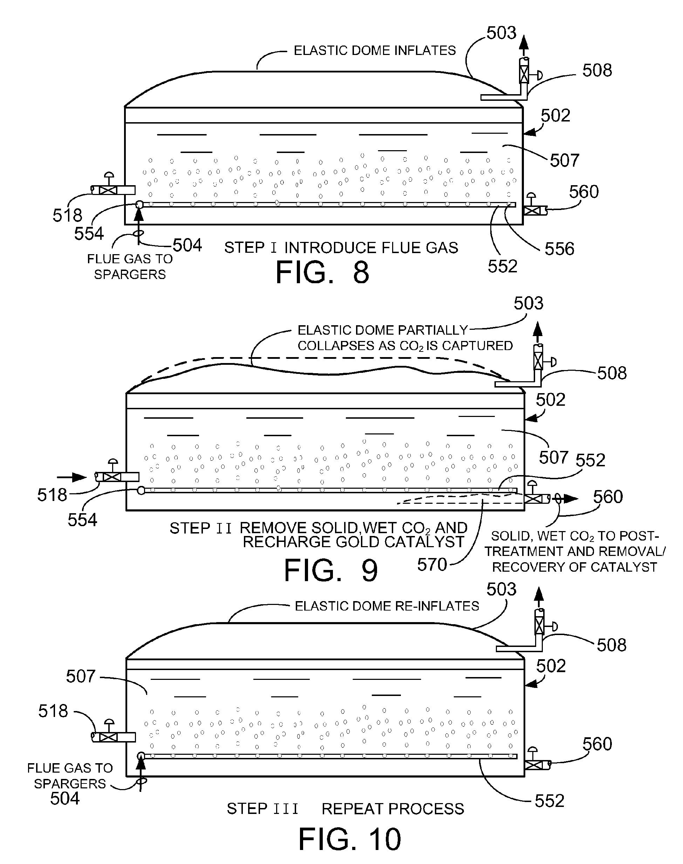

Turning to Figures 8 through 10 these Figures illustrate one example arrangement using the set-up of Figures 5 through 7. Figures 8 through 10 detail various phases of an example process. Specifically, as is illustrated in Figures 8 through 10, Step I of the example process of these Figures involves supplying a flue gas, or combustion, to expandable tank reactor 502 and spargers 552 via inlet 504. Upon entering the interior of expandable tank reactor 502 the flue gas, or combustion gas, bubbles forth from spargers 552 and reacts with the aqueous, or liquid, solution or reaction medium 507 contained within expandable tank reactor 502 to yield a solid polymer complex of captured carbon oxides, a solid polymer complex of captured sulfur oxides, non-gaseous carbonates, sulfates, and/or sulfites 570 (see Figure 9) that are captured and removed from expandable tank reactor 502 via any suitable technique including, but not limited to, a separator, settling, etc. via optional collection outlet 560. In Step II (see Figure 9), the solid polymer complex 570 is removed via, for example, optional collection outlet 560 and if necessary additional reaction medium 507 can be added to the interior of expandable tank reactor 502 via inlet 518. In Step III (see Figure 10), the process can be cycled back to the beginning and repeated in a continuous manner.

The present invention and the methods disclosed herein will now be further detailed using various examples. It should be noted that the present invention is not limited to the following examples. As such, the following examples are for illustrative purposes only and are non-limiting in nature.

### Example 1:

This example utilizes a homogeneous catalysis process employing sea water which contains dissolved gold acting as a catalyst for the carbon dioxide reactions that form polymer/matrices of CO₃. As is known to those of skill in the art, the "gold" in sea water is generally in a neutral oxidation state (Au⁰). The temperature at which the reactor is operated can be between 28.4°F (the freezing point of salt water) and something less than about 80°F (the observed decomposition temperature of the CO₂ solid back to CO₂ gas). It should be noted that the reaction temperature and/or the reaction rate can be increased by increasing the pH of the reaction medium. The primary process is initiated in an efficient absorption device that would provide excellent contact between the sea water or brine concentrate or synthesized solution and the flue gas to facilitate the maximum absorption of carbon dioxide by liquid medium.

As carbon dioxide is reacted (captured) to form the solid polymer chains, more carbon dioxide is soluble/absorbed in the liquid medium to make up for the carbon dioxide that has been removed/captured/reacted to form the solid polymers. The chemical reactions catalyzed by gold atoms in either of these liquid mediums continue until the practical limits of the gold atoms are reached, empirical observation indicates supple polymer chains of captured CO₂ of, for example, uniform and consistent lengths of approximately 12 mm emanating in the same plane in 4 directions 90° apart from each gold atom, or all of the carbon dioxide is removed/captured from the flue gas. Empirical data supports calculations estimating a Turnover Number [TON] of 2 billion molecules of CO₂ to one atom of Au⁰.

The captured CO₂ appears as a supple yet delicate white flocculent precipitate. Untreated the solid CO₂ polymer complex when removed from solution will immediately decompose to CO₂ gas; decomposition also occurs at elevated ambient temperatures around 90°F ± 15°F. The captured CO₂ in a polymer complex solid could be stabilized at significantly higher temperatures in the aqueous, or liquid, solution or reaction medium by raising the pH levels in preparation for permanent wet storage. Alternatively, the addition of other stabilizers such as coatings and/or adhesives to the captured CO₂ in the polymer complex solid will allow drying of the captured CO₂ solid in preparation for permanent solid storage. If the captured carbon dioxide is allowed to decompose to high purity carbon dioxide gas the high purity CO₂ gas can be compressed to alter its physical state to that desired for disposal or for feedstock purposes for the polymer or chemical industries. The remaining material is a gold compound concentrate which can be sent to the smelter to render high purity elemental gold.

### Example 2:

This example is similar to Example 1 except that the captured CO₂ remains in the untreated solid state and the gold is not extracted but remains as sacrificial catalyst. The solid CO₂ can be returned to bottom of the cold ocean floor where it will remain dormant like sand or used in some other industry. While not wishing to be bound by any one theory, it is believed that the one or more metal catalysts (e.g., gold, zinc, palladium catalysts) act as a sacrificial catalyst holding the solid polymer complex containing the captured carbon oxides.

### Example 3:

This example utilizes a homogeneous catalysis process employing an aqueous, or liquid, solution or reaction medium which contains a controlled amount of gold atoms acting as a sacrificial catalyst for the carbon dioxide reactions that form solid polymer/matrices of CO₂. The temperature at which the reactor is operated can be between 28.4°F (the freezing point of salt water) and something less than about 80°F (the decomposition temperature of the CO₂ solid, as observed). It should be noted that the reaction temperature and/or the reaction rate can be increased by increasing the pH of the aqueous, or liquid, solution or reaction medium. Since the concentration of gold in sea water is approximately 1 mg of gold per metric ton of sea water, a high CO₂ capture efficiency with shorter reactions times at higher ambient operating temperatures between 60°F to 75°F is possible with higher gold concentrations and/or higher pH levels in controlled aqueous, or liquid, solutions or reaction mediums. The primary process is an efficient absorption device that provides excellent contact between a controlled aqueous, or liquid, gold solution and the flue gas to facilitate the maximum absorption of carbon dioxide by the aqueous, or liquid, solution. The homogenous catalysis reactions of the present invention are also a function of the local concentrations of CO₂ and/or pH levels, thereby supporting a higher CO₂ solubility which increases with lower temperatures. 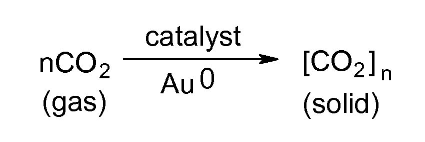 While not wishing to be bound to any one theory, the above reaction is used to represent one possible method by which the gaseous carbon dioxide of this example is captured and converted into a solid state. In another example, the solid product of the present invention may or may not be in a form that contains a [CO₂]ₙ repeating unit or monomer. Instead, another polymer structure or structures derived from a carbon dioxide molecule could exist in the solid product of the present invention.

The white flocculent precipitate produced is sent to a gravity separator. The gold is reclaimed and recombined with the spent solution; thereby reconstituting the aqueous, or liquid, gold solution which is recycled back to the reactor. In some examples, one or more additional steps may be necessary to render the gold catalyst suitable for return back to the reactor. If so desired, pure CO₂ gas can be removed by drying or warming the white precipitate to approximately 90°F. The high purity CO₂ gas can be compressed to alter its physical state to that desired for disposal or for feedstock purposes for the polymer or chemical industries.

### Example 4:

This example utilizes a heterogeneous catalysis process employing solid gold catalyst of optimum geometries submerged in water (see Figure 4). The primary process is an efficient absorption device that provides excellent contact between fresh water and the flue gas to facilitate the maximum absorption of carbon dioxide by the water. The reactions take place when the dissolved carbon dioxide contacts the gold surfaces which catalyze the carbon dioxide reactions that form solid polymer/matrices of CO₂. The operating conditions are the same as the previous example. The white precipitate can be stabilized with a coating or an adhesive. The heterogeneous catalytic reactors are cycled to blow down (clean the catalytic surfaces) prior to removal of the captured CO₂ which is in the form of a white precipitate. The white precipitate is then sent to a gravity separator. The water is reclaimed and recycled. The stabilized high purity CO₂ precipitate is sent to storage.

### Example 5:

This example utilizes a heterogeneous catalysis process employing solid gold catalyst of optimum geometries submerged in water. The primary process is an efficient adsorption device that would provide excellent contact between carbon dioxide in the flue gas to facilitate the maximum adsorption of carbon dioxide on the solid catalytic gold surfaces. The reactions take place when the carbon dioxide (gas) contacts the gold solid surfaces which catalyze the carbon dioxide reactions that form long chain polymers/matrices of solid CO₂. The operating conditions are the same as Example 3. Prior to removal the solid CO₂ is stabilized with a coating or adhesive the heterogeneous catalytic reactors are cycled to water blow down (water clean the catalytic surfaces) to remove the capture CO₂ which is in the form of a white precipitate. The white precipitate is sent to a gravity separator. The water is reclaimed and recycled. The high purity precipitate is sent to storage or can be utilized in various other industries as is known in the art.

### Example 6:

Materials: (1) one 5 gallon glass bottle; (2) one 14 foot diameter weather balloon; (3) wide range litmus pH paper; (4) four gallons of sea water collected at Myrtle Beach in four plastic "spring water" bottles; (4) 6.46 pounds of dry ice; (5) two 10 pound blocks of ice and 22 pounds of crushed ice; and (6) one Coleman Cooler - 2 cubic feet capacity.

The following procedure is used to conduct this example: The sea water, pH approximately 7 (slightly acidic as measured with wide range pH paper), is added to the 5 gallon glass bottle. To the bottle is added 3 pounds of crushed dry ice via a funnel. The dry ice begins to sublime into CO₂ gas and escapes from the neck of the glass bottle. As quickly as possible the weather balloon is connected to the neck of the 5 gallon bottle. The dry ice continues to sublime into CO₂ gas until all of the dry ice is "used up." Visual inspection of the weather balloon confirms that the balloon contains 3 to 4 cubic feet of CO₂ gas. After three hours, the balloon is again checked and appears to be deflating (*i*.*e*., the carbon dioxide is being captured by the sea water). After another 2.5 hours the balloon has deflated further and this example is terminated. Only about 1 quart to a half gallon of CO₂ gas remains in the balloon (via visual examination).

Next the water contained in the 5 gallon bottle is observed. With a gentle hand swirl the presence of a white flocculent material suspended/floating in the sea water is seen rising from the bottom of the bottle. The white flocculent material appears to be a fluffy mass consisting of an intricate labyrinth of interconnected material.

Additional examples are detailed in the following table; these additional examples are non-limiting in nature and detail additional examples that are within the scope of the present invention.

**TABLE 1**

| Example | Water Source | CO₂ Source | Gold Source | Gold Oxidation State | Amount of Water (Gallons) | Amount of Dry Ice (Ibs) | Gold Amount | Beginning pH | Final pH | CO₂ Equilibrium Absorption Theory | Precipitate |
|---|---|---|---|---|---|---|---|---|---|---|---|
| 7 | Sea Water | Dry Ice | Naturally Occurring | Neutral (Au⁰) | 4 | 3.5 | Naturally Occurring | <7 | >7 | Not Observed | Yes |
| 8 | Distilled | Dry Ice | None | N/A | 4 | 8 | N/A | 6 | 4 | Observed | No |
| 9 | Distilled | Dry Ice | AuCl | Au⁺¹ | 4 | 8 | 150 mg | 6 | 4 | Observed | No |
| 10 | Distilled | Dry Ice | AuCl/AuCl₃ | Au⁺¹/Au⁺³ | 4 | 8 | 250 mg | 4 | 4 | Observed | No |
| 11 | Distilled | Dry Ice | AuCl/AuCl₃ | Au⁺¹/Au⁺³ | 4 | 8 | 250 mg | N/A | N/A | pH Not Measured | No |
| 12 | Distilled | Dry Ice | AuCl₃ | Au⁺³ | 4 | 8 | 290 mg | 6 | 6 | Not Observed | No |
| 13 | Distilled | Dry Ice | Au Particles 0.5 µm to 0.8 µm | Neutral (Au⁰) | 4 | 8 | 250 mg | 6 | 4 | Observed | Yes |
| 14 | Distilled | Dry Ice | Au Particles 0.5 µm to 0.8 µm | Neutral (Au⁰) | 2 | 5.5 | 250 mg | 6 | 6 | Not Observed | Yes |
| 15 | Distilled | CO₂ Gas | Colloidal - 10 nm | Neutral (Au⁰) | 0.51 | 1.0 | 250 mg | 9 | 4.8 | Not Observed | Yes |
| 16 | Distilled | CO₂ Gas | None | N/A | 2 | 5.5 | N/A | 6 | 3.8 | Observed | No |
| 17 | Distilled | None - N₂ Gas | Colloidal - 10 nm | Neutral (Au⁰) | 0.51 | N/A | 250 mg | 9 | 8.5 | NA | No |

Regarding the precipitate of Example 7, the white flocculent remained stable for 7 days at ambient temperatures in excess of 90°F. In Examples 13 and 14 the gold particles were sprinkled into 3.5 gallons of distilled water. Examples 8, 16 and 17 are designed to help determine the nature of the sequestration reaction that occurs in the one or more embodiments of the present invention.

While specific embodiments of the present invention have been shown and described in detail to illustrate the application and principles of the invention, it will be understood that it is not intended that the present invention be limited thereto and that the invention may be embodied otherwise without departing from such principles. In some embodiments of the invention, certain features of the invention may sometimes be used to advantage without a corresponding use of the other features. Accordingly, all such changes and embodiments properly fall within the scope of the following claims.

## Claims

1. A method for capturing one or more gaseous carbon oxides and/or sulfur oxides from a flue gas, the method comprising the steps of:
(I) providing a flue gas containing at least one gaseous carbon oxide and/or sulfur oxide to a reaction vessel, wherein the reaction vessel contains an aqueous, or liquid, reaction medium therein, the aqueous, or liquid, reaction medium comprising one or more sacrificial metal catalysts selected from neutral metal atoms, neutral metal particles, metal ions, or mixtures of two or more thereof;
(II) permitting the flue gas from Step (I) to react with, or in, the aqueous, or liquid, reaction medium in order to form one or more solid polymer complexes from the at least one gaseous carbon oxide and/or sulfur oxide; and
(III) removing the one or more solid polymer complexes from the reaction medium.

2. The method of claim 1, wherein the one or more sacrificial metal catalysts are selected from precious metal catalysts, and wherein the precious metal catalysts may optionally include one or more selected from the group comprising, gold metal catalysts, neutral gold metal particles, neutral gold metal nanoparticles, and neutral gold metal atoms (Au⁰).

3. A method for capturing one or more gaseous carbon oxides and/or sulfur oxides from a flue gas, the method comprising the steps of:
(a) providing a flue gas containing at least one gaseous carbon oxide compound and/or sulfur oxide compound to a reaction containment structure, wherein the reaction containment structure contains at least one solution, the solution comprising one or more metal atoms and/or metal ions that act as one or more sacrificial catalysts which initiate a polymerization reaction in one or more gaseous carbon oxides and/or sulfur oxides; and
(b) permitting the flue gas from Step (a) to react with, or in, the at least one solution thereby forming one or more solid polymer complexes according to one or more of the following reactions: 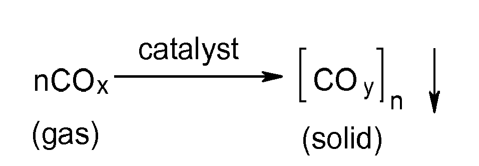 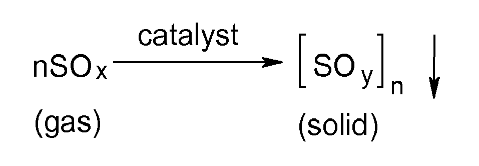
where each n independently represents the moles of carbon oxides and/or sulfur oxides present, where each x and y independently represent the number of oxygen atoms, and where x and y can be equal to or different from one another.

4. The method of claim 3, wherein the one or more metal atoms and/or metal ions that act as one or more sacrificial catalysts are selected from alkali metals ions (Group 1 metals - New Notation System), alkali-earth metals ions (Group 2), transition metals ions (including those metals in Groups 3 through 11), other metal ions in Group 12, or combinations of any two or more thereof.

5. The method of claim 3 or 4, wherein the one or more metal atoms and/or metal ions that act as one or more sacrificial catalysts are selected from ions formed from the elements listed in Groups 13 through 17.

6. The method of claim 3, 4 or 5, wherein the one or more metal atoms and/or metal ions that act as one or more sacrificial catalysts are selected from the elements listed in the Lanthanide and Actinide Series of the Periodic Table.

7. The method of any of claims 3 to 6, wherein the one or more metal atoms and/or metal ions that act as one or more sacrificial catalysts are selected from alkali metals ions (Group 1 metals - New Notation System), alkali-earth metals ions (Group 2), transition metals ions (including those metals in Groups 3 through 11), other metal ions in Group 12, one or more ions selected from ions formed from the elements listed in Groups 13 through 17, one or more ions formed from the elements listed in the Lanthanide and Actinide Series of the Periodic Table, or combinations of two or more thereof.

8. The method of any of claims 3 to 7, wherein the one or more metal atoms and/or metal ions that act as one or more sacrificial catalysts are selected from gold compositions, silver compositions, palladium compositions, platinum compositions, or mixtures of two or more thereof.

9. The method of claim 8, wherein the one or more metal atoms and/or metal ions that act as one or more sacrificial catalysts are selected from gold catalysts, and optionally wherein the one or more metal atoms are neutral gold metal atoms (Au⁰).

10. The method of claim 8, wherein the one or more metal atoms and/or metal ions that act as one or more sacrificial catalysts are selected from precious metal nanoparticle catalysts including gold nanoparticle catalyst compounds, silver nanoparticle catalyst compounds, palladium nanoparticle catalyst compounds, platinum nanoparticle catalyst compounds, or mixtures of two or more thereof.

11. The method of claim 10, wherein the nanoparticles have an average particle diameter selected from the group comprising: less than about 1,000 nanometers, less than about 500 nanometers, and less than about 250 nanometers.

12. The method of any of claims 3 to 11, wherein the concentration of the at least one catalyst is selected from the group comprising: at least about 5 parts per trillion (ppt), at least about 10 ppt, at least about 20 ppt, at least about 25 ppt, and at least about 50 ppt.

13. A method for capturing one or more gaseous carbon oxides and/or sulfur oxides from a flue gas, the method comprising the steps of:
(i) providing a flue gas containing at least one gaseous carbon oxide compound and/or sulfur oxide compound to a reaction containment structure, wherein the reaction containment structure contains at least one homogeneous solution, the homogeneous solution comprising one or more metal atoms and/or metal ions that act as one or more sacrificial catalysts which initiate a polymerization reaction in one or more gaseous carbon oxides and/or sulfur oxides; and
(ii) permitting the flue gas from Step (i) to react with, or in, the at least one homogeneous solution thereby forming one or more solid polymer complexes according to one or more of the following reactions: 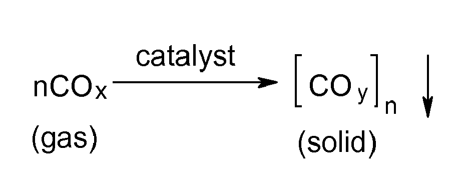 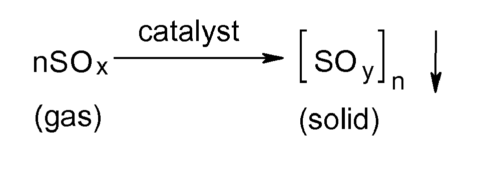
where each n independently represents the moles of carbon oxides and/or sulfur oxides present, where each x and y independently represent the number of oxygen atoms, and where x and y can be equal to or different from one another.

14. The method of claim 13, wherein the one or more metal atoms and/or metal ions that act as one or more sacrificial catalysts are selected from alkali metals ions (Group 1 metals - New Notation System), alkali-earth metals ions (Group 2), transition metals ions (including those metals in Groups 3 through 11), other metal ions in Group 12, or combinations of any two or more thereof.

15. The method of claim 13 or 14, wherein the one or more metal atoms and/or metal ions that act as one or more sacrificial catalysts are selected from ions formed from the elements listed in Groups 13 through 17.

16. The method of claim 13, 14 or 15, wherein the one or more metal atoms and/or metal ions that act as one or more sacrificial catalysts are selected from the elements listed in the Lanthanide and Actinide Series of the Periodic Table.

17. The method of any of claims 13 to 16, wherein the one or more metal atoms and/or metal ions that act as one or more sacrificial catalysts are selected from alkali metals ions (Group 1 metals - New Notation System), alkali-earth metals ions (Group 2), transition metals ions (including those metals in Groups 3 through 11), other metal ions in Group 12, one or more ions selected from ions formed from the elements listed in Groups 13 through 17, one or more ions formed from the elements listed in the Lanthanide and Actinide Series of the Periodic Table, or combinations of two or more thereof.

18. The method of any of claims 13 to 17, wherein the one or more metal atoms and/or metal ions that act as one or more sacrificial catalysts are selected from gold compositions, silver compositions, palladium compositions, platinum compositions, or mixtures of two or more thereof.

19. The method of claim 18, wherein the one or more metal atoms and/or metal ions that act as one or more sacrificial catalysts are selected from gold catalysts, and optionally wherein the one or more metal atoms are neutral gold metal atoms (Au⁰).

20. The method of claim 18, wherein the one or more metal atoms and/or metal ions that act as one or more sacrificial catalysts are selected from precious metal nanoparticle catalysts including gold nanoparticle catalyst compounds, silver nanoparticle catalyst compounds, palladium nanoparticle catalyst compounds, platinum nanoparticle catalyst compounds, or mixtures of two or more thereof.

21. The method of claim 32, wherein the nanoparticles have an average particle diameter selected from the group comprising: less than about 1,000 nanometers, less than about 500 nanometers, and less than about 250 nanometers.

22. The method of any of claims 13 to 21, wherein the concentration of the at least one catalyst is selected from the group comprising: at least about 5 parts per trillion (ppt), at least about 10 ppt, at least about 20 ppt, at least about 25 ppt, and at least about 50 ppt.
